# EUROPEAN PATENT APPLICATION

(11) **EP 1 001 012 A1**
(43) Date of publication of application: **17.05.2000**
(21) Application number: 98870249.4
(22) Date of filing: 10.11.1998
(51) Int. Cl.: C11D 3/48, C11D 3/39, C11D 1/62, A01N 65/00

(54) **Disinfecting and cleaning compositions**

(71) Applicant: THE PROCTER & GAMBLE COMPANY, Cincinnati, Ohio 45202 (US)
(72) Inventor: Serego, Giadra (NMN) Allighieri, 00197 Rome (IT); Romano, Nicoletta (NMN), 00144 Rome (IT)
(74) Representative: Engisch, Gautier

(57) **Abstract**

The present invention relates to a disinfecting and cleaning composition, comprising a peroxygen bleach, a chelating agent, a quaternary ammonium compound and an essential oil, active or derivative thereof.

## Description

### Technical field

The present invention relates to compositions suitable for disinfecting and cleaning various surfaces comprising antimicrobial components. The compositions of the present invention provide immediate and residual antimicrobial efficacy.

### Background

Disinfecting and cleaning compositions which have the ability to reduce or even eliminate micro-organisms existing on a surface have been described in the art. However, it has been found that such compositions generally comprise disinfecting components which do not provide sustained disinfection over a prolonged period of time.

It is therefore an object of the present invention to provide effective disinfection using ingredients which provide effective and sustainable disinfection.

The present invention provides a composition comprising antimicrobial components that in combination surprisingly provide sustainable disinfection. The composition of the present invention in fact provides excellent disinfection over a broad range of bacterial pure strains including Gram positive (e.g. Staphylo coccus aureus) and Gram negative (e.g. Pseudomanas aeroginosa) bacterial strains and even provides disinfection over the more resistant micro-organisms like fungi (e.g. Candida albicans), even at high dilution levels, i.e., up to dilution levels of from 1:100 (composition:water).

The compositions of the present invention can be used on all types of surfaces including hard-surfaces as well as in laundry applications, or even in human application.

WO 88/00795 relates to a disinfectant composition comprising organic acids, perborates, peracids or their salts in combination with quaternary ammonium salt and an essential oil.

Co-pending patent application No. 96870001.3 (publication No. P 0 784 091) relates to a perfumed composition comprising active oxygen, surfactant and a cyclic terpene/sequiterpene perfume.

None of these prior art documents disclose the combination of the present invention.

### Summary of the invention

According to the present invention, there is provided a disinfecting and cleaning composition comprising a peroxygen bleach, a chelating agent, a quaternary ammonium compound and an essential oil, active or derivative thereof.

### Detailed description of the invention

It has now been found that the combination of a peroxygen bleach, a chelating agent, a quaternary ammonium compound and an antimicrobial essential oil active or derivative thereof, provides improved disinfecting properties and even provides sustained disinfection over a prolonged period of time. Furthermore, the composition even provide such disinfectancy benefits under highly diluted conditions. By "improved disinfecting properties" it is meant herein that the disinfection delivered by combining a surfactant, a chelating agent and an antimicrobial essential oil and/or an active thereof, in a composition, is improved as compared to the disinfection delivered by using only one or two or three of said ingredients, in said composition.

Disinfection properties of a composition may be measured by the bactericidal activity of said composition. A test method suitable to evaluate the bactericidal activity of a composition is described in European Standard, prEN 1040, CEN/TC 216 N 78, dated November 1995 issued by the European committee for standardisation, Brussels. European Standard, prEN 1040, CEN/TC 216 N 78, specifies a test method and requirements for the minimum bactericidal activity of a disinfecting composition. The test is passed if the bacterial colonies forming units (cfu) are reduced from a 10⁷ cfu (initial level) to a 10² cfu (final level after contact with the disinfecting product), i.e. a 10⁵ reduction of the viability is necessary. The compositions of the present invention pass this test, even if used in highly diluted conditions. In fact the compositions described herein also provide residual efficacy. By residual efficacy is it to be understood that antimicrobial efficacy is provided over prolonged periods of time up to approximately 24 hours.

### Peroxygen Bleach

It is believed that the presence of peroxygen bleach, especially hydrogen peroxide contributes to the disinfecting properties of the compositions according to the present invention. Indeed, peroxygen bleach may attack the vital functions of the micro-organism cells, for example it may inhibit the assembling of ribosomes units within the cytoplasm of the micro-organism cells. Furthermore peroxygen bleaches like hydrogen peroxide, is a strong oxidizing agent that generates hydroxyl free radicals which may attack proteins and nucleic acids which further contribute to the described antimicrobial function.

Peroxygen bleach, especially hydrogen peroxide also provide strong stain removal benefits which are particularly noticeable for example in laundry and hard surfaces applications.

The peroxygen bleaching agent is either hydrogen peroxide or a source thereof. A source of hydrogen peroxide refers to any compound which produces hydrogen peroxide when said compound is in contact with water. Suitable water-soluble sources of hydrogen peroxide for use herein include percarbonates, persilicate, persulphate such as monopersulfate, perborates and peroxyacids such as diperoxydodecandioic acid (DPDA), magnesium perphthalic acid and mixtures thereof. However, the preferred peroxygen bleach is hydrogen peroxide itself.

In addition, other classes of peroxides can be used as an alternative to hydrogen peroxide and sources thereof or in combination with hydrogen peroxide and sources thereof. Suitable classes include dialkylperoxides, diacylperoxides, preformed percarboxylic acids, organic and inorganic peroxides and/or hydroperoxides.

The compositions herein may comprise up to 15% by weight of the total composition of a peroxygen bleach or a mixture thereof, preferably from 0.5% to 10%, and more preferably from 1% to 8%.

### Chelating agent

The composition of the present invention comprise a chelating agent. Suitable chelating agents to be used herein may be any chelating agent known to those skilled in the art. Preferred chelating agents are those selected from the group consisting of phosphonate chelating agents, amino carboxylate chelating agents or other carboxylate chelating agents, or polyfunctionally-substituted aromatic chelating agents or mixtures thereof.

Such chelating agents may include etidronic acid, 1-hydroxyethylidene-bisphosphonic acid (HEDP) as well as amino phosphonate compounds, including amino alkylene poly (alkylene phosphonate), alkali metal ethane 1-hydroxy diphosphonates, nitrilo trimethylene phosphonates, ethylene diamine tetra methylene phosphonates, and diethylene triamine penta methylene phosphonates. The phosphonate compounds may be present either in their acid form or as salts of different cations on some or all of their acid functionalities. Preferred phosphonate chelating agents to be used herein are HEDP and/or diethylene triamine penta methylene phosphonates. Such phosphonate chelating agents are commercially available from Monsanto under the trade name and a DEQUEST, especially DEQUEST 2010.

Polyfunctionally-substituted aromatic chelating agents may also be useful in the compositions herein. See U.S. patent 3,812,044, issued May 21, 1974, to Connor et al. Preferred compounds of this type in acid form are dihydroxydisulfobenzenes such as 1,2-dihydroxy-3,5-disulfobenzene.

A preferred biodegradable chelating agent for use herein is ethylene diamine N,N'- disuccinic acid, or alkali metal, or alkaline earth, ammonium or substitutes ammonium salts thereof or mixtures thereof Ethylenediamine N,N'- disuccinic acids, especially the (S,S) isomer have been extensively described in US patent 4, 704, 233, November 3, 1987 to Hartman and Perkins. Ethylenediamine N,N'- disuccinic acid is, for instance, commercially available under the tradename ssEDDS® from Palmer Research Laboratories.

Suitable amino carboxylate chelating agents useful herein include ethylene diamine tetra acetate, diethylene triamine pentaacetate, diethylene triamine pentacetate (DTPA), N-hydroxyethylethylenediamine triacetate, nitrilotriacetate, ethylenediamine tetraproprionate, triethylenetetraaminehexa-acetate, ethanoldiglycine, propylene diamine tetracetic acid (PDTA) and methyl glycine di-acetic acid (MGDA), both in their acid form, or in their alkali metal, ammonium, and substituted ammonium salt forms. Particularly suitable to be used herein are diethylene triamine penta acetic acid (DTPA), propylene diamine tetracetic acid (PDTA) which is, for instance, commercially available from BASF under the trade name Trilon FS® and methyl glycine di-acetic acid (MGDA).

Further carboxylate chelating agents to be used herein include malonic acid, salicylic acid, glycine, aspartic acid, glutamic acid, dipicolinic acid and derivatives thereof, or mixtures thereof.

Typically, the chelating agent, or a mixture thereof, is present in the composition at a level of from 0.001 % to 5% by weight, preferably from 0.002% to 3% by weight and more preferably from 0.002% to 1.5%.

### Quaternary ammonium compounds

The compositions of the present invention comprise a quaternary ammonium compound. Suitable quaternary ammonium compounds are those that provide an anti-microbial function. Such compounds are preferably selected from the group consisting of the salts of monoalkyltrimethyl ammonium, dialkyldimethyl ammonium, esteraromatic ammonium, trisquaternary ammonium, polysubstituted ammonium and mixtures thereof. A preferred compound of the group of mono alkyl trimethyl ammonium salts is cetiltrimethyl ammonium bromide (CTAB). Suitable phenolic compounds for use herein include o-penyl-phenol, o-benzyl(p-chlorophenol), 4-tertamylphenol and mixtures thereof.

### Essential oil

Compositions of the present invention also comprise an essential oil or an active or derivative or a mixture thereof.

Suitable antimicrobial essential oils to be used herein are those essential oils which exhibit antimicrobial activity. By "actives of essential oils" it is meant herein any ingredient of essential oils that exhibit antimicrobial activity. It is speculated that said antimicrobial essential oils and actives thereof may act as proteins denaturing agents. Also, said antimicrobial oils and actives thereof are compounds which contribute to the safety profile of a composition comprising them when it is used to disinfect any surface. A further advantage of said antimicrobial oils and actives thereof is that they impart pleasant odour to a composition comprising them without the need of adding a perfume.

Such essential oils include, but are not limited to, those obtained from thyme, lemongrass, citrus, lemons, oranges, anise, clove, aniseed, pine, cinnamon, geranium, roses, mint, lavender, citronella, eucalyptus, peppermint, camphor, sandalwood, rosmarin, vervain, fleagrass, lemongrass, ratanhiae, cedar and mixtures thereof. Preferred antimicrobial essential oils to be used herein are thyme oil, clove oil, cinnamon oil, geranium oil, eucalyptus oil, peppermint oil, mint oil or mixtures thereof.

Actives of essential oils to be used herein include, but are not limited to, thymol (present for example in thyme), eugenol (present for example in cinnamon and clove), menthol (present for example in mint), geraniol (present for example in geranium and rose), verbenone (present for example in vervain), eucalyptol and pinocarvone (present in eucalyptus), cedrol (present for example in cedar), anethol (present for example in anise), carvacrol, hinokitiol, berberine, ferulic acid, cinnamic acid, methyl salycilic acid, methyl salycilate, terpineol and mixtures thereof. Preferred actives of essential oils to be used herein are thymol, eugenol, verbenone, eucalyptol, terpineol, cinnamic acid, methyl salycilic acid, citric acid and/or geraniol.

Thymol may be commercially available for example from Aldrich, eugenol may be commercially available for example from Sigma, Systems - Bioindustries (SBI) - Manheimer Inc.

Typically, the antimicrobial essential oil or actives thereof or mixture thereof is present in the composition at a level of at least 0.003% by weight of the total composition, preferably from 0.006% to 10%, more preferably from 0.03% to 4% and most preferably of from 0.1% to 2%.

### Optional components

The compositions herein may further comprise a variety of other optional ingredients such as surfactants, solvents, builders, stabilisers, bleach activators, soil suspenders, dye transfer agents, brighteners, perfumes, anti dusting agents, enzymes, dispersant, dye transfer inhibitors, pigments, perfumes, radical scavengers and dyes.

### Surfactants

Surfactants are optional, but highly preferred components of the composition of the present invention. Suitable surfactants include anionic, nonionic, cationic, amphoteric and/or, zwitterionic surfactants.

Particularly suitable anionic surfactants to be used herein include water soluble salts or acids of the formula ROSO₃M wherein R is preferably a C₆-C₂₄ hydrocarbyl, preferably an alkyl or hydroxyalkyl having a C₁₀-C₂₀ alkyl component, more preferably a C₁₂-C₁₈ alkyl or hydroxyalkyl, and M is H or a cation, e.g., an alkali metal cation (e.g., sodium, potassium, lithium), or ammonium or substituted ammonium (e.g., methyl-, dimethyl-, and trimethyl ammonium cations and quaternary ammonium cations, such as tetramethyl-ammonium and dimethyl piperdinium cations and quaternary ammonium cations derived from alkylamines such as ethylamine, diethylamine, triethylamine, and mixtures thereof, and the like).

Other suitable anionic surfactants to be used herein include alkyl-diphenyl-ether-sulphonates and alkyl-carboxylates. Other anionic surfactants can include salts (including, for example, sodium, potassium, ammonium, and substituted ammonium salts such as mono-, di- and triethanolamine salts) of soap, C₉-C₂₀ linear alkylbenzenesulfonates, C₈-C₂₂ primary or secondary alkanesulfonates, C₈-C₂₄ olefinsulfonates, sulfonated polycarboxylic acids prepared by sulfonation of the pyrolyzed product of alkaline earth metal citrates, e.g., as described in British patent specification No. 1,082,179, C₈-C₂₄ alkylpolyglycolethersulfates (containing up to 10 moles of ethylene oxide); alkyl ester sulfonates such as C₁₄₋₁₆ methyl ester sulfonates; acyl glycerol sulfonates, fatty oleyl glycerol sulfates, alkyl phenol ethylene oxide ether sulfates, paraffin sulfonates, alkyl phosphates, isethionates such as the acyl isethionates, N-acyl taurates, alkyl succinamates and sulfosuccinates, monoesters of sulfosuccinate (especially saturated and unsaturated C₁₂-C₁₈ monoesters) diesters of sulfosuccinate (especially saturated and unsaturated C₆-C₁₄ diesters), acyl sarcosinates, sulfates of alkylpolysaccharides such as the sulfates of alkylpolyglucoside (the nonionic nonsulfated compounds being described below), branched primary alkyl sulfates, alkyl polyethoxy carboxylates such as those of the formula RO(CH₂CH₂O)ₖCH₂COO-M⁺ wherein R is a C₈-C₂₂ alkyl, k is an integer from 0 to 10, and M is a soluble salt-forming cation. Resin acids and hydrogenated resin acids are also suitable, such as rosin, hydrogenated rosin, and resin acids and hydrogenated resin acids present in or derived from tall oil. Further examples are given in "Surface Active Agents and Detergents" (Vol. I and II by Schwartz, Perry and Berch). A variety of such surfactants are also generally disclosed in U.S. Patent 3,929,678, issued December 30, 1975 to Laughlin, et al. at Column 23, line 58 through Column 29, line 23 (herein incorporated by reference).

Preferred anionic surfactants for use in the compositions herein are the alkyl benzene sulfonates, alkyl sulfates, alkyl alkoxylated sulfates, paraffin sulfonates and mixtures thereof.

Suitable amphoteric surfactants to be used herein include betaine and sulphobetaine surfactants, derivatives thereof or mixtures thereof. Said betaine or sulphobetaine surfactants are preferred herein as, they help disinfection by increasing the permeability of the bacterial cell wall, thus allowing other active ingredients to enter the cell.

Furthermore, due to the mild action profile of said betaine or sulphobetaine surfactants, they are particularly suitable for the cleaning of delicate surfaces, e.g. delicate laundry or surfaces in contact with food and/or babies. Betaine and sulphobetaine surfactants are also extremely mild to the skin and/or surfaces to be treated.

Suitable betaine and sulphobetaine surfactants to be used herein are the betaine/sulphobetaine and betaine-like detergents wherein the molecule contains both basic and acidic groups which form an inner salt giving the molecule both cationic and anionic hydrophilic groups over a broad range of pH values. Some common examples of these detergents are described in U.S. Pat. Nos. 2,082,275, 2,702,279 and 2,255,082, incorporated herein by reference. Preferred betaine and sulphobetaine surfactants herein are according to the formula 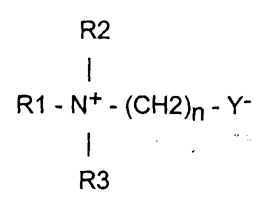 wherein R1 is an alkyl radical containing from 1 to 24 carbon atoms, preferably from 8 to 18, and more preferably from 12 to 14, wherein R2 and R3 contain from 1 to 3 carbon atoms, and preferably 1 carbon atom, wherein n is an integer from 1 to 10, preferably from 1 to 6 and more preferably is 1, Y is selected from the group consisting of carboxyl and sulfonyl radicals and wherein the sum of R1, R2 and R3 radicals is from 14 to 24 carbon atoms, or mixtures thereof.

Examples of particularly suitable betaine surfactants include C12-C18 alkyl dimethyl betaine such as coconut-betaine and C10-C16 alkyl dimethyl betaine such as laurylbetaine. Coconutbetaine is commercially available from Seppic under the trade name of Amonyl 265®. Laurylbetaine is commercially available from Albright & Wilson under the trade name Empigen BB/L®.

Other suitable amphoteric surfactants to be used herein include amine oxides having the following formula R₁R₂R₃NO wherein each of R1, R2 and R3 is independently a saturated substituted or unsubstituted, linear or branched alkyl group of from 1 to 30 carbon atoms, preferably of from 6 to 30 carbon atoms, more preferably of from 10 to 20 carbon atoms, and most preferably of from 8 to 18 carbon atoms. Preferred amine oxides for use herein are for instance natural blend C8-C10 amine oxides as well as C12-C16 amine oxides commercially available from Hoechst. Suitable short chain amine oxides to be used according to the present invention are amine oxides having the following formula R₁R₂R₃NO wherein R1 is a C6 to C10 alkyl group, preferably a C8 to C10 alkyl group and wherein R2 and R3 are independently substituted or unsubstituted, linear or branched alkyl groups of from 1 to 4 carbon atoms, preferably of from 1 to 3 carbon atoms, and more preferably are methyl groups. R1 may be a saturated linear or branched alkyl group. Preferred short chain amine oxides for use herein are for instance natural blend C8-C10 amine oxides available from Hoechst.

In a preferred embodiment of the present invention, the surfactant is a surfactant system comprising an amine oxide and a betaine or sulphobetaine surfactant, preferably in a weight ratio of amine oxide to betaine or sulphobetaine of 2:1 to 100:1, more preferably of 6:1 to 100:1. Using such a surfactant system together with a chelating agent and an antimicrobial essential oil or active thereof, in a composition, provides not only effective disinfecting properties and effective cleaning performance to said composition but also provides the cleaned surfaces with a shiny effect, i.e., the amount of filming/streaking left on the cleaned surface that has been treated with said composition is minimal.

Suitable nonionic surfactants to be used herein are fatty alcohol ethoxylates and/or propoxylates which are commercially available with a variety of fatty alcohol chain lengths and a variety of ethoxylation degrees. Indeed, the HLB values of such alkoxylated nonionic surfactants depend essentially on the chain length of the fatty alcohol, the nature of the alkoxylation and the degree of alkoxylation. Surfactant catalogues are available which list a number of surfactants, including nonionics, together with their respective HLB values.

Suitable chemical processes for preparing the nonionic surfactants for use herein include condensation of corresponding alcohols with alkylene oxide, in the desired proportions. Such processes are well known to the man skilled in the art and have been extensively described in the art. As an alternative, a great variety of alkoxylated alcohols suitable for use herein is commercially available from various suppliers.

Particularly suitable to be used herein as nonionic surfactants are hydrophobic nonionic surfactants having an HLB (hydrophilic-lipophilic balance) below 16, preferably below 15, more preferably below 12, and most preferably below 10. Those hydrophobic nonionic surfactants have been found to provide good grease cutting properties.

Preferred hydrophobic nonionic surfactants to be used in the compositions according to the present invention are surfactants having an HLB below 16 and being according to the formula RO-(C₂H₄O)ₙ(C₃H₆O)ₘH, wherein R is a C₆ to C₂₂ alkyl chain or a C₆ to C₂₈ alkyl benzene chain, and wherein n+m is from 0 to 20 and n is from 0 to 15 and m is from 0 to 20, preferably n+m is from 1 to 15 and, n and m are from 0.5 to 15, more preferably n+m is from 1 to 10 and, n and m are from 0 to 10. The preferred R chains for use herein are the C₈ to C₂₂ alkyl chains. Accordingly, suitable hydrophobic nonionic surfactants for use herein are Dobanol ^{R} 91-2.5 (HLB= 8.1; R is a mixture of C9 and C₁₁ alkyl chains, n is 2.5 and m is 0), or Lutensol ^{R} TO3 (HLB=8; R is a C₁₃ alkyl chains, n is 3 and m is 0), or Lutensol ^{R} AO3 (HLB=8; R is a mixture of C₁₃ and C₁₅ alkyl chains, n is 3 and m is 0), or Tergitol ^{R} 25L3 (HLB= 7.7; R is in the range of C₁₂ to C₁₅ alkyl chain length, n is 3 and m is 0), or Dobanol ^{R} 23-3 (HLB=8.1; R is a mixture of C₁₂ and C₁₃ alkyl chains, n is 3 and m is 0), or Dobanol ^{R} 23-2 (HLB=6.2; R is a mixture of C₁₂ and C₁₃ alkyl chains, n is 2 and m is 0), or Dobanol ^{R} 45-7 (HLB=11.6; R is a mixture of C₁₄ and C₁₅ alkyl chains, n is 7 and m is 0) Dobanol ^{R} 23-6.5 (HLB=11.9; R is a mixture of C₁₂ and C₁₃ alkyl chains, n is 6.5 and m is 0), or Dobanol ^{R} 25-7 (HLB=12; R is a mixture of C₁₂ and C₁₅ alkyl chains, n is 7 and m is 0), or Dobanol ^{R} 91-5 (HLB=11.6; R is a mixture of C₉ and C₁₁ alkyl chains, n is 5 and m is 0), or Dobanol ^{R} 91-6 (HLB=12.5; R is a mixture of C₉ and C₁₁ alkyl chains, n is 6 and m is 0), or Dobanol ^{R} 91-8 (HLB=13.7; R is a mixture of C₉ and C₁₁ alkyl chains, n is 8 and m is 0), Dobanol ^{R} 91-10 (HLB=14.2 ; R is a mixture of C₉ to C₁₁ alkyl chains, n is 10 and m is 0), or mixtures thereof Preferred herein are Dobanol ^{R} 91-2.5 , or Lutensol ^{R} TO3, or Lutensol ^{R} AO3, or Tergitol ^{R} 25L3, or Dobanol ^{R} 23-3, or Dobanol ^{R} 23-2, or mixtures thereof These Dobanol^{R} surfactants are commercially available from SHELL. These Lutensol^{R} surfactants are commercially available from BASF and these Tergitol ^{R} surfactants are commercially available from UNION CARBIDE.

Suitable zwitterionic surfactants contain both cationic and anionic hydrophilic groups on the same molecule at a relatively wide range of pH's. The typical cationic group is a quaternary ammonium group, although other positively charged groups like phosphonium, imidazolium and sulfonium groups can be used. The typical anionic hydrophilic groups are carboxylates and sulfonates, although other groups like sulfates, phosphonates, and the like can be used. A generic formula for some preferred zwitterionic surfactants is

R₁-N⁺(R₂)(R₃)R₄X-

wherein R₁ is a hydrophobic group; R₂ and R₃ are each C₁-C₄ alkyl, hydroxy alkyl or other substituted alkyl group which can also be joined to form ring structures with the N; R₄ is a moiety joining the cationic nitrogen atom to the hydrophilic group and is typically an alkylene, hydroxy alkylene, or polyalkoxy group containing from 1 to 4 carbon atoms; and X is the hydrophilic group which is preferably a carboxylate or sulfonate group. Preferred hydrophobic groups R₁ are alkyl groups containing from 8 to 22, preferably less than 18, more preferably less than 16 carbon atoms. The hydrophobic group can contain unsaturation and/or substituents and/or linking groups such as aryl groups, amido groups, ester groups and the like. In general, the simple alkyl groups are preferred for cost and stability reasons.

Other specific zwitterionic surfactants have the generic formulae:

R₁-C(O)-N(R₂)-(C(R₃)₂)ₙ-N(R₂)₂⁽⁺⁾-(C(R₃)₂)ₙ-SO₃⁽⁻⁾

or

R₁-C(O)-N(R₂)-(C(R₃)₂)ₙ-N(R₂)₂⁽⁺⁾-(C(R₃)₂)ₙ-COO⁽⁻⁾

wherein each R₁ is a hydrocarbon, e.g. an alkyl group containing from 8 up to 20, preferably up to 18, more preferably up to 16 carbon atoms, each R₂ is either a hydrogen (when attached to the amido nitrogen), short chain alkyl or substituted alkyl containing from one to 4 carbon atoms, preferably groups selected from the group consisting of methyl, ethyl, propyl, hydroxy substituted ethyl or propyl and mixtures thereof, preferably methyl, each R₃ is selected from the group consisting of hydrogen and hydroxy groups and each n is a number from 1 to 4, preferably from 2 to 3, more preferably 3, with no more than one hydroxy group in any (C(R₃)₂) moiety. The R₁ groups can be branched and/or unsaturated. The R₂ groups can also be connected to form ring structures. A surfactant of this type is a C₁₀-C₁₄ fatty acylamido-propylene(hydroxypropylene)sulfobetaine that is available from the Sherex Company under the trade name "Varion CAS sulfobetaine"®.

Typically, the surfactant or mixtures thereof where present is incorporated into the composition at a level of from 0.01% to 50% by weight of the total composition, preferably from 0.01% to 30% and more preferably from 0.1% to 10%. Suitable surfactants include

Suitable quaternary ammonium compounds for use herein are quaternary ammonium compounds containing alkyl or substituted alkyl groups, alkyl amide and carboxylic acid groups, ether groups, unsaturated alkyl groups, and cyclic quaternary ammonium compounds, which can be chlorides, dichlorides, bromides, methylsulphates, chlorophenates, cylcohexylsulphamates or salts of the other acids. Among the possible cyclic quaternary ammonium compounds are the following :
- alkylpyridinium chlorides and/or sulphates, the alkyl group being preferably cetyl, dodecyl or hexadecyl group;
- alkylisoquinolyl chlorides and/or bromides, the alkyl group being preferably dodecyl group.

Suitable phenolic compounds for use herein include o-penyl-phenol, o-benzyl(p-chlorophenol), 4-tertamylphenol and mixtures thereof.

### Radical scavengers

The compositions herein may further comprise a radical scavenger as a preferred optional ingredient. Suitable radical scavengers for use herein include the well-known substituted mono and di hydroxy benzenes and derivatives thereof, alkyl- and aryl carboxylates and mixtures thereof. Preferred radical scavengers for use herein include di-tert-butyl hydroxy toluene, hydroquinone, di-tert-butyl hydroquinone, mono-tert-butyl hydroquinone, tert-butyl-hydroxy anysole, benzoic acid, toluic acid, catechol, t-butyl catechol, 2-methoxy-phenol, 2-ethoxy-phenol, 4-allyl-catechol, 2-methoxy-4-(2-propenyl )phenol, benzylamine, 1,1,3-tris(2-methyl-4-hydroxy-5-t-butylphenyl) butane, as well as n-propyl-gallate. Highly preferred for use herein is di-tert-butyl hydroxy toluene, which is for example commercially available from SHELL under the trade name IONOL CP®.

Typically, the compositions according to the present invention comprise up to 5% by weight of the total composition of a radical scavenger, or mixtures thereof, preferably from 0.01% to 1.5% by weight and more preferably from 0.01% to 1%.

### Solvents

The compositions herein may comprise as an optional ingredient a solvent or mixtures thereof. When used, solvents will, advantageously, give an enhanced cleaning to the compositions of the present invention. Suitable solvents for incorporation in the compositions according to the present invention include propylene glycol derivatives such as n-butoxypropanol or n-butoxypropoxypropanol, water-soluble CARBITOL® solvents or water-soluble CELLOSOLVE® solvents. Water-soluble CARBITOL® solvents are compounds of the 2-(2-alkoxyethoxy)ethanol class wherein the alkoxy group is derived from ethyl, propyl or butyl. A preferred water-soluble carbitol is 2-(2-butoxyethoxy)ethanol also known as butyl carbitol. Water-soluble CELLOSOLVE® solvents are compounds of the 2-alkoxyethoxyethanol class, with 2-butoxyethoxyethanol being preferred. Other suitable solvents are benzyl alcohol, methanol, ethanol, isopropyl alcohol and diols such as 2-ethyl-1,3-hexanediol and 2,2,4-trimethyl-1,3-pentanediol and mixture thereof. Preferred solvents for use herein are n-butoxypropoxypropanol, butyl carbitol® and mixtures thereof. A most preferred solvent for use herein is butyl carbitol®.

The solvents may typically be present within the compositions of the invention at a level up to 15% by weight, and preferably from 1% to 7% by weight of the composition.

### pH buffers

In the embodiment of the present invention wherein the compositions are formulated in the alkaline pH range, typically from 7 to 12, the compositions according to the present invention may further comprise a pH buffer or a mixture thereof i.e. a system composed of a compound or a combination of compounds, whose pH changes only slightly when a strong acid or base is added.

Suitable pH buffers for use herein in neutral to basic condition include borate pH buffer, phosphonate, silicate and mixtures thereof Suitable borate pH buffers for use herein include alkali metal salts of borates and alkyl borates and mixtures thereof Suitable borate pH buffers to be used herein are alkali metal salts of borate, metaborate, tetraborate, octoborate, pentaborate, dodecaboron, borontrifluoride and/or alkyl borate containing from 1 to 12 carbon atoms, and preferably from 1 to 4. Suitable alkyl borate includes methyl borate, ethyl borate and propyl borate. Particularly preferred herein are the alkali metal salts of metaborate (e.g. sodium metaborate), tetraborate (e.g., sodium tetraborate decahydrate) or mixtures thereof.

Boron salts like sodium metaborate and sodium tetraborate are commercially available from Borax and Societa Chimica Larderello under the trade name sodium metaborate® and Borax®.

In the embodiment of the present invention wherein the compositions are formulated in the acidic pH range (i.e. below 7), preferably from 2 to 6, more preferably from 2 to 4, the compositions according to the present invention may further comprise a pH buffer or a mixture thereof i.e. a system composed of a compound or a combination of compounds, whose pH changes only slightly when a strong acid or base is added.

Suitable pH buffers for use herein in acidic condition include organic acids and mixtures thereof. Suitable organic acids for use herein include monocarboxylic acids, dicarboxylic acids and tricarboxylic acids or mixtures thereof. Preferred organic acids for use herein include acetic acid, citric acid, malonic acid, maleic acid, malic acid, lactic acid, glutaric acid, glutamic acid, aspartic acid, methyl succinic acid, succinic acid or mixtures thereof Particularly preferred herein are the citric acid and succinic acid or mixtures thereof.

Citric acid is commercially available as an aqueous solution from Jungbunzlauer under the trade name Citric acid®.

Typically, the compositions according to the present invention may comprise up to 15% by weight of the total composition of a pH buffer, or mixtures thereof, preferably from 0.01% to 10%, more preferably from 0.01% to 5% and most preferably from 0.1% to 3%.

The compositions herein may further comprise a variety of other optional ingredients such builders, stabilisers, bleach activators, soil suspenders, dye transfer agents, brighteners, perfumes, anti dusting agents, enzymes, dispersant, dye transfer inhibitors, pigments, perfumes and dyes.

In the embodiment, where the compositions according to the present invention are aqueous liquid cleaning compositions, they preferably have a pH as is of not more than 12.0, more preferably from 1 to 10, and most preferably from 2 to 9. The pH of the compositions can be adjusted by using organic or inorganic acids, or alkalinising agents.

As effective disinfection is provided with the combination of ingredients of the present invention the compositions comprising said combination do not require the addition of other antimicrobial compounds. However, if desired in one embodiment of the present invention said compositions may comprise further antimicrobial components, as optional ingredients. Such antimicrobial ingredients include parabens like ethyl paraben, propyl paraben, methyl paraben, glutaraldehyde or mixtures thereof.

### Form of the compositions

The combination of ingredients according to the present invention may be formulated in a composition being either in a solid, pasty or liquid form. In the case where the compositions according to the present invention are formulated as solids, they will be mixed with an appropriate solvent, typically water, before use.

The compositions herein are more preferably in liquid form, most preferably aqueous liquid form.

The composition may be packaged in a variety of suitable detergent packaging known to those skilled in the art. When the composition is in liquid form, the packaging is preferably a manually operated spray dispensing container, which is usually made of synthetic organic polymeric plastic materials. Indeed, said spray-type dispensers allow the user to uniformly apply the composition to a relatively large surface area. Such spray-type dispensers are particularly suitable to disinfect vertical surfaces.

Suitable spray-type dispensers to be used according to the present invention include manually operated foam trigger-type dispensers sold for example by Specialty Packaging Products, Inc. or Continental Sprayers, Inc. These types of dispensers are disclosed, for instance, in US-4,701,311 to Dunnining et al. and US-4,646,973 and US-4,538,745 both to Focarracci. Particularly preferred to be used herein are spray-type dispensers such as T 8500® commercially available from Continental Spray International or T 8100® commercially available from Canyon, Northern Ireland. Such dispensers comprise a nozzle through which the liquid is sprayed in fine liquid droplets resulting. Preferably the nozzle is designed such that the composition is sprayed. Indeed, in such a spray-type dispenser the composition is preferably dispersed using a pumping mechanism which the user operates. More particularly, in said spray-type dispenser head the composition is forced against an obstacle, e.g. a grid or a cone or the like, thereby providing shocks to help atomise the liquid composition, i.e. to help the formation of liquid droplets.

The compositions of the present invention may also be applied to a surface in the form of wipes. By "wipes" it is meant herein disposable towels, e.g., paper towels onto or into which the composition according to the present invention is incorporated. In a preferred execution said wipes incorporate a liquid composition. Preferably said wipes are packaged in a plastic, preferably resealable box. The advantage of this execution is faster and more convenient usage of the disinfecting composition by the user, this even outside the house, i.e. there is no need to pour the liquid compositions according to the present invention on the surfaces to be treated/disinfect and to dry it out with a cloth. In other words, wipes allow disinfection of surfaces in one step.

### Processes of disinfecting a hard-surface

The present invention encompasses a process of disinfecting a hard-surface with a composition, as defined herein, said process comprising the step of applying said composition onto said surface.

The hard-surfaces to treat with the compositions herein are those typically found in houses like kitchens, bathrooms, e.g., tiles, walls, floors, chrome, glass, smooth vinyl, any plastic, plastified wood, table top, sinks, cooker tops, dishes, sanitary fittings such as sinks, showers, shower curtains, wash basins, WCs and the like. Hard-surfaces also include household appliances including, but not limited to, refrigerators, freezers, washing machines, automatic dryers, ovens, microwave ovens, dishwashers and so on.

In such a process a disinfecting composition, as described herein, needs to be contacted with the hard-surfaces to be disinfected. Thus, the present invention also encompasses a process of disinfecting a hard-surface with a disinfecting composition as described herein, wherein said process comprises the step of applying said composition to said hard-surface, preferably only infected portions thereof and optionally rinsing said hard-surface.

In the process of disinfecting hard-surfaces according to the present invention the disinfecting compositions as described herein are in liquid form and may be applied to the surface to be disinfected in their neat form or in their diluted form typically at a dilution level up to 100 times their weight of water, preferably into 80 to 2 times their weight of water, and more preferably 60 to 10 times.

In the preferred embodiment of the process of the present invention wherein said liquid composition is applied to a hard-surface to be disinfected in its diluted form, it is not necessary to rinse the surface after the composition has been applied, indeed no visible residues are left onto the surface.

The present invention will be further illustrated by the following examples.

### EXAMPLES

| **Compositions (weight %)** | **I** | **II** | **III** | **IV** | **V** | **VI** | **VII** |
|---|---|---|---|---|---|---|---|
| Hydrogen peroxide | 1.2 | 1.0 | 1.5 | 1.0 | 1.5 | 1.5 | 1.0 |
| Thymol | 0.045 | 0.02 | 0.1 | 0.01 | 0.02 | 0.02 | 0.02 |
| Geraniol | --- | --- | --- | --- | --- | --- | 0.03 |
| Poly(propylene glycol) mono butyl ether* | 0.25 | 0.25 | 0.5 | 0.5 | 0.5 | 0.5 | 0.25 |
| C10 alkyl Sulphate | --- | --- | 7.0 | --- | --- | --- | --- |
| Benzyl alcohol | --- | --- | --- | 0.8 | 0.8 | 0.8 | --- |
| Amine oxide** | 0.55 | 0.40 | 0.9 | 0.9 | 0.9 | 0.9 | 0.4 |
| Butyl carbitol | 0.55 | 0.55 | --- | 0.3 | 0.3 | 0.3 | 0.55 |
| Butoxy propanol | 0.55 | 0.55 | --- | 1.2 | 1.2 | 1.2 | -- |
| Propylene glycol butyl ether | -- | -- | -- | -- | -- | -- | 0.55 |
| Ethanol | 9.4 | 9.4 | 2.5 | 1.0 | 1.0 | 1.0 | 9.4 |
| Citric acid | 1.5 | 0.75 | 1.5 | 0.5 | --- | 0.7 | 0.75 |
| Salicylic acid | 0.03 | 0.03 | 0.03 | 0.03 | 0.03 | 0.03 | 0.03 |
| Butyl hydroxy toluene | 0.01 | 0.01 | 0.01 | 0.01 | 0.01 | 0.01 | 0.01 |
| Quaternary ammonium salt | 0.1-5 | 0.1-5 | 0.1-5 | 0.1-5 | 0.1-5 | 0.1-5 | 0.1-5 |
| Water and minors | up to 100% | | | | | | |

## Claims

1. A disinfecting and cleaning composition comprising peroxygen bleach, a chelating agent, a quaternary ammonium compound and an essential oil, active or derivative thereof.

2. A composition according to claim 1 wherein the peroxygen bleach is selected from hydrogen peroxide, a source of hydrogen peroxide or a mixture thereof.

3. A composition according to either of claims 1 or 2 wherein the peroxygen bleach is hydrogen peroxide.

4. A composition according to any preceding claim wherein the chelating agent is selected from the group consisting of phosphonate chelating agents, amino carboxylate chelating agents, or other carboxylate chelating agents, or polyfunctionally-substituted aromatic chelating agents and mixtures thereof.

5. A composition according to claim 4 wherein the chelating agent is selected from the group consisting of etidronic acid, an alkali metal ethane 1-hydroxy diphosphonate, nitrilo trimethylene phosphonate, ethylene diamine tetra methylene phosphonate, diethylene triamine penta methylene phosphonate, dihydroxydisulfobenzene, ethylenediamine N,N'-disuccinic acid, ethylene diamine tetra acetate, diethylene triamine pentaacetate, N-hydroxyethylethylenediamine triacetate, nitrilotri-acetate, ethylenediamine tetraproprionate, triethylenetetraminehexa-acetate, ethanoldiglycine, propylene diamine tetracetic acid, methyl glycine di-acetic acid, malonic acid, salicylic acid, glycine, aspartic acid, glutamic acid, dipicolinic acid, and mixtures thereof.

6. A composition according to any preceding claims wherein the quaternary compound is selected from the group consisting of salts of monoalkyltrimethyl ammonium, dialkyldimethyl ammonium, eteroaromatic ammonium, bisquaternary ammonium, polysubstituted ammonium.

7. A composition according to any preceding claims wherein the essential oil is selected from the group consisting of thyme oil, lemongrass oil, citrus oil, lemon oil, orange oil, anise oil, clove oil, aniseed oil, cinnamon oil, geranium oil, rose oil, lavender oil, citronella oil, eucalyptus oil, peppermint oil, mint oil, camphor oil, sandalwood oil, cedar oil, rosmarin oil, pine oil, vervain oil, fleagrass oil, lemongrass oil, ratanhiae oil and mixtures thereof, and wherein said active or derivative of essential oil is selected from the group consisting of thymol, eugenol, menthol, carvacrol, verbenone, eucalyptol, cedrol, anethol, pinocarvone, geraniol, hinokitiol, berberine, ferulic acid, citric acid, cinnamic acid, methyl salycilic acid, methyl salycilate, terpineol and mixtures thereof.

8. A composition according to claim 6 wherein the essential oil, active or derivative thereof is selected from thyme oil, clove oil, cinnamon oil, geranium oil, eucalyptus oil, peppermint oil, mint oil, , thymol, eugenol, verbenone, eucalyptol, terpineol, cinnamic acid, methyl salycilic acid, geraniol.

9. A composition according to any preceding claims wherein the essential oil active or derivative thereof is thymol and / or geraniol and/or citric acid

10. The use of a composition according to any of the preceding claims to provide a immediate antimicrobial efficacy.

11. The use of a composition according to any of claims 1 to 9 to provide residual antimicrobial efficacy.
